## Europäisches Patentamt

## European Patent Office

## Office européen des brevets

(19)

(11) Veröffentlichungsnummer: **0 175 674**
**B1**

(12) **EUROPÄISCHE PATENTSCHRIFT**

(45) Veröffentlichungstag der Patentschrift:
**19.11.87**

(51) Int. Cl.⁴: **B 60 K 17/346**

(21) Anmeldenummer: **85890179.6**

(22) Anmeldetag: **08.08.85**

(54) **Antriebsanordnung für Kraftfahrzeuge.**

(30) Priorität: **30.08.84 AT 2781/84**

(43) Veröffentlichungstag der Anmeldung:
**26.03.86 Patentblatt 86/13**

(45) Bekanntmachung des Hinweises auf die Patenterteilung:
**19.11.87 Patentblatt 87/47**

(84) Benannte Vertragsstaaten:
**BE DE FR GB IT**

(56) Entgegenhaltungen:
**GB - A - 1 022 551**
**GB - A - 1 138 943**
**GB - A - 1 375 106**

(73) Patentinhaber: **Steyr-Daimler-Puch Aktiengesellschaft,
Kärntnerring 7, A-1010 Wien (AT)**

(72) Erfinder: **Lanzer, Heribert, Dipl.-Ing., Hauptstrasse 236,
A-8071 Gössendorf (AT)**

ACTORUM AG

**Beschreibung**

Die Erfindung betrifft eine Antriebsanordnung für Kraftfahrzeuge mit zwei Triebachsen, bei der dem Geschwindigkeits-Wechselgetriebe ein Ausgleich- bzw. Verteilergetriebe nachgeordnet ist, an dessen Abtriebsgliedern die beiden Triebachsen angeschlossen sind, zwischen denen eine Flüssigkeits-Reibungskupplung vorgesehen ist.

Eine Flüssigkeits-Reibungskupplung besteht aus Innen- und Aussenlamellen, die drehfest mit entsprechenden Lamellenträgern verbunden und in einem geschlossenen Gehäuse untergebracht sind, das mit einer Flüssigkeit hoher Viskosität gefüllt ist. Diese Innen- und Aussenlamellen bzw. deren Lamellenträger, also die beiden zu kuppelnden Teile der Flüssigkeits-Reibungskupplung sind ihrerseits mit den beiden Abtriebsgliedern des Ausgleichgetriebes drehfest verbunden. Tritt eine Relativbewegung zwischen den Abtriebsgliedern des Ausgleichgetriebes auf, so wird dieser von der Flüssigkeits-Reibungskupplung ein Moment entgegengesetzt, das in seiner Grösse von der Differenzdrehzahl abhängig ist. Dieses Reibmoment wirkt dann sperrend auf das jeweils schneller drehende Abtriebsglied des Ausgleichgetriebes. Die Arbeitsflüssigkeit in der Flüssigkeits-Reibungskupplung wird durch die Relativbewegung zwischen den beiden Abtriebsgliedern des Ausgleichgetriebes und somit auch zwischen den Innen- und Aussenlamellen auf Scherung beansprucht. Solche selbstsperrende Ausgleichgetriebeanordnungen sind bereits bekannt und haben sich durchaus bewährt. Dabei ist bisher aber die Flüssigkeits-Reibungskupplung unmittelbar in das Ausgleichgetriebe integriert, d.h. es sind beispielsweise der Aussenlamellenträger mit dem Ausgleichgetriebegehäuse und der Innenlamellenträger mit einem der Abtriebswellen des Ausgleichgetriebes unmittelbar verbunden. Daher muss die Flüssigkeits-Reibungskupplung gleich grosse Momente wie das Ausgleichgetriebe selbst übertragen. Handelt es sich um Anordnungen, bei denen im Ausgleichgetriebe vergleichsweise niedrige Drehzahlen auftreten, so ergeben sich dann für die Flüssigkeits-Reibungskupplung verhältnismässig grosse Abmessungen. Ausserdem kann sie nicht gegen eine solche, mit anderen Kennwerten, ausgetauscht und dadurch dem Kraftfahrzeug ein anderes Fahrverhalten gegeben werden.

Aus der GB-A-13 57 106 ist eine Antriebsanordnung für Kraftfahrzeuge mit zwei Triebachsen, einem Ausgleich- bzw. Verteilergetriebe und einer zwischen dessen Abtriebsgliedern angeordneten Flüssigkeits-Reibungskupplung der eingangs geschilderten Art bekannt, bei der diese Kupplung mit dem Ausgleichgetriebe zu einer Baueinheit zusammengefasst und die beiden zu kuppelnden Teile der Kupplung unmittelbar mit den Abtriebsgliedern des Ausgleichgetriebes verbunden sind. Auch hier treten die bereits angeführten Nachteile auf.

Es ist auch aus der DE-C-845 904 eine Antriebsanordnung für Kraftfahrzeuge bekannt, bei der eine elektromagnetische Schlupfbremse über eine Übersetzung ins Schnelle von den über ein Ausgleichgetriebe gekoppelten Wellen einer Triebachse eines Kraftfahrzeuges angetrieben ist. Die Schlupfbremse weist jedoch völlig andersartige Charakteristika auf als eine Flüssigkeits-Reibungskupplung.

Aus der GB-A-1,022,551 ist ein steuerbares Verteilergetriebe bekannt, an dessen Abtriebsglieder die beiden Triebachsen eines Kraftfahrzeuges angeschlossen sind. Zwischen den Triebachsen ist eine hydraulisch gesteuerte Differentialsperre für das Verteilergetriebe vorgesehen, welche zwei Reibungskupplungen enthält. Die beiden Reibungskupplungen haben jedoch gegenüber einer Flüssigkeits-Reibungskupplung eine gänzlich verschiedene Wirkungsweise, da sie nur zwei Schaltzustände besitzen.

Somit liegt der Erfindung die Aufgabe zugrunde, die angeführten Mängel zu beseitigen und eine Antriebsanordnung für Kraftfahrzeuge der eingangs geschilderten Art zu schaffen, bei der die Flüssigkeits-Reibungskupplung als leicht auswechselbare Baueinheit ausgeführt ist und wesentlich kleiner bzw. schwächer dimensioniert werden kann.

Die Erfindung löst die gestellte Aufgabe dadurch, dass die Flüssigkeits-Reibungskupplung als selbständige Baueinheit ausgebildet ist und ihre beiden zu kuppelnden Teile von je einem der beiden Abtriebsglieder des Ausgleichgetriebes über einen ins Schnelle übersetzenden Stirnradtrieb angetrieben sind.

Da die Flüssigkeits-Reibungskupplung nicht mehr in das Ausgleichgetriebe integriert, sondern von diesem getrennt ist, besteht die vorteilhafte Möglichkeit, bei sonstigen gleichen Bauteilen und Anordnungen die Flüssigkeits-Reibungskupplung gegen eine solche mit anderen Kennwerten auszutauschen und dadurch dem Kraftfahrzeug ein anderes Fahrverhalten zu geben. Die beiden zu kuppelnden Teile der Flüssigkeits-Reibungskupplung drehen mit einer dem Übersetzungsverhältnis des entsprechenden Triebes höheren Drehzahl als die Abtriebsglieder des Ausgleichgetriebes. Durch diese Übersetzung ins Schnelle ergibt sich aber auch in der Flüssigkeits-Reibungskupplung eine vielfach grössere Drehzahldifferenz als am Abtrieb des Ausgleichgetriebes, und das Sperrmoment ist entsprechend kleiner als das Differenzmoment an den Abtriebsgliedern des Ausgleichgetriebes. Daher kann die Flüssigkeits-Reibungskupplung wesentlich kleinere Abmessungen als bisher erhalten und es ergibt sich auch ein entsprechend verringerter Raumbedarf. Ausserdem ist die derart angeordnete Flüssigkeits-Reibungskupplung von der Temperatur des Ausgleichgetriebes unabhängig.

Bei einer Antriebsanordnung mit einem Ausgleichgetriebe, dessen Wellen quer zur Fahrtrichtung liegen, wobei das eine Antriebsglied unmittelbar mit dem Ausgleichgetriebegehäuse der einen Triebachse und das andere Abtriebsglied über einen Stirnradtrieb und einen Winkeltrieb mit einer zur anderen Triebachse führenden Gelenkwelle verbunden ist, ist in vorteilhafter Weise auf der Welle des getriebenen Rades des Stirnradtriebes der eine der zu kuppelnden Teile der Flüssigkeits-Reibungskupplung angeordnet und der andere dieser Teile ist vom Ausgleichgetriebegehäuse her über einen weiteren Stirnradtrieb mit demselben Übersetzungsverhältnis wie der erstere angetrieben. Diese Konstruktion ermöglicht ohne wesentliche Veränderungen einer solchen Antriebsanordnung die nachträgliche Anordnung einer Flüssigkeits-Reibungskupplung als selbständige Baueinheit, die aussen an das Getriebe angebaut sein kann und daher eine leichte Zugänglichkeit sowie Austauschbarkeit und eine Servicefreundlichkeit gewährleistet. Es ist lediglich erforderlich, an das Ausgleichgetriebegehäuse der einen Triebachse das treibende Rad eines Stirnradtriebes anzuschrauben und dessen getriebenes Rad mit einer nach aussen führenden Hohlwelle drehfest anzuordnen. Die bereits vorhandene Abtriebswelle für den Winkeltrieb zum Antrieb der anderen Triebachse muss durch die Hohlwelle nach aussen geführt und mit dem einen Teil und die Hohlwelle mit dem anderen Teil der Flüssigkeits-Reibungskupplung verbunden werden.

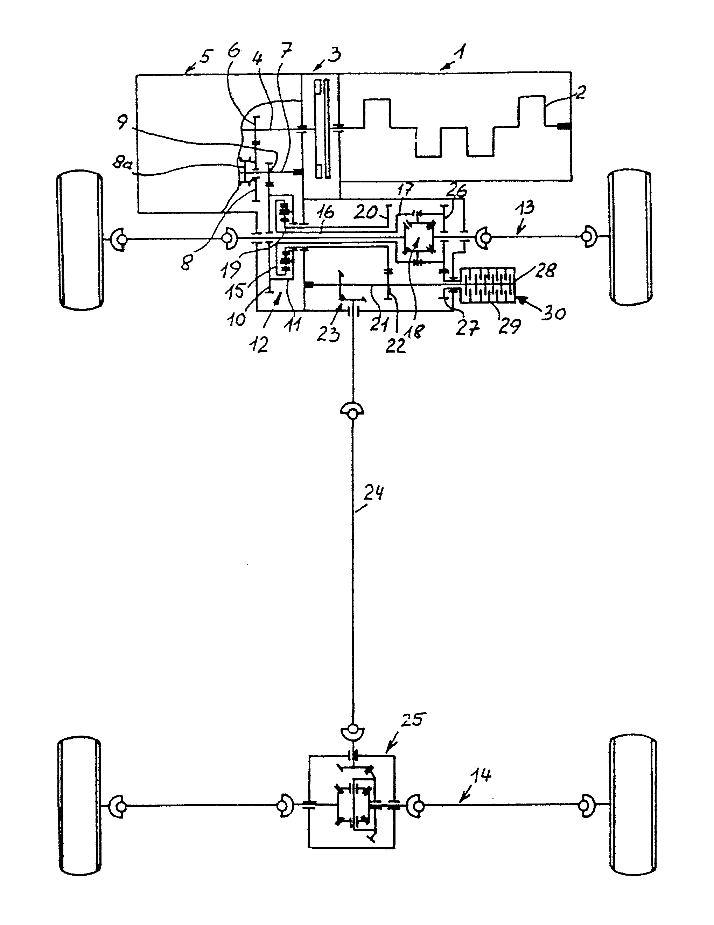

In der Zeichnung ist der Erfindungsgegenstand in einem Ausführungsbeispiel rein schematisch dargestellt, und zwar zeigt die einzige Figur eine Anordnung zum Ausgleich zwischen zwei angetriebenen Fahrzeugachsen.

Ein querliegender Antriebsmotor 1 besitzt eine Kurbelwelle 2, welche über eine Schaltkupplung 3, eine Eingangswelle 4 eines Geschwindigkeits-Wechselgetriebes 5 antreibt. Ein mit der Eingangswelle 4 drehfest verbundenes Stirnzahnrad 6 kämmt mit einem lose auf einer Ausgangswelle 7 des Geschwindigkeit-Wechselgetriebes 5 sitzenden Stirnzahnrad 8, welches mit der Ausgangswelle 7 über eine Klaue 8a in bekannter Weise drehfest kuppelbar ist. Ein weiteres drehfest mit der Ausgangswelle 7 verbundenes Stirnzahnrad 9 steht mit einer Stirnverzahnung 10 eines Planetenradträgers 11 eines als Planetenradgetriebe ausgebildeten Ausgleichgetriebes 12 im Eingriff, welches zum Längsausgleich der Drehzahlunterschiede von zwei getriebenen Fahrzeugachsen 13, 14 dient. Das Hohlrad 15 des Planetenradgetriebes ist über eine Hohlwelle 16 mit dem Getriebegehäuse 17 eines üblichen Ausgleichgetriebes 18 für die eine Achse 13 verbunden. Mit dem Sonnenrad 19 des Planetenradgetriebes ist ein Stirnrad 20 drehfest verbunden, mit dem ein auf einer Welle 21 drehfest sitzenden Ritzel 22 kämmt. Von dieser Welle 21 ist über einen Kegeltrieb 23 eine Kardanwelle 24 angetrieben, die über ein übliches Ausgleichgetriebe 25 die andere Fahrzeugachse 14 antreibt. Das Getriebegehäuse 17 des Ausgleichgetriebes 18 trägt ein Stirnrad 26, das dem mit dem Sonnenrad 19 verbundenen Stirnrad 20 entspricht und mit einem Ritzel 27 kämmt. Die beiden Stirnräder 20 und 26 sind mit den Abtriebsgliedern des als Planetenradgetriebe ausgebildeten Ausgleichgetriebes 12 verbunden und treiben über die Ritzel 22 und 27 die beiden zu kuppelnden Lamellenpakete 28 und 29 einer Flüssigkeits-Reibungskupplung 30 an, die als Sperre für das Ausgleichgetriebe wirksam ist.

## Patentansprüche

1. Antriebsanordnung für Kraftfahrzeuge mit zwei Triebachsen (13, 14), bei der dem Geschwindigkeits-Wechselgetriebe (5) ein Ausgleich- bzw. Verteilergetriebe (12) nachgeordnet ist, an dessen Abtriebsglieder (15, 19) die beiden Triebachsen (13, 14) angeschlossen sind, zwischen denen eine Flüssigkeits-Reibungskupplung (39) vorgesehen ist, *dadurch gekennzeichnet*, dass die Flüssigkeits-Reibungskupplung (30) als selbständige Baueinheit ausgebildet ist und ihre beiden zu kuppelnden Teile (28, 29) von je einem der beiden Abtriebsglieder (15, 19) des Ausgleichgetriebes (12) über einen ins Schnelle übersetzenden Stirnradtrieb (20, 22; 26, 27) angetrieben sind.

2. Antriebsanordnung nach Anspruch 1, mit einem Ausgleichgetriebe (12), dessen Wellen quer zur Fahrtrichtung liegen, wobei das eine Abtriebsglied (15) unmittelbar mit dem Ausgleichgetriebegehäuse (17) der einen Triebachse (13) und das andere Abtriebsglied (19) über einen Stirnradtrieb (20, 22) und einen Winkeltrieb (23) mit einer zur anderen Triebachse (14) führenden Gelenkwelle 24 verbunden ist, *dadurch gekennzeichnet*, dass auf der Welle (21) des getriebenen Rades (22) des Stirnradtriebes (20, 22) der eine (28) der zu kuppelnden Teile (28, 29) der Flüssigkeits-Reibungskupplung (30) angeordnet und der andere (29) dieser Teile (28, 29) vom Ausgleichgetriebegehäuse (17) her über einen weiteren Stirnradtrieb (26, 27) mit demselben Übersetzungsverhältnis wie der erstere angetrieben ist.

3. Antriebsanordnung nach Anspruch 2, *dadurch gekennzeichnet*, dass die Flüssigkeits-Reibungskupplung (30) von aussen an das Ausgleichgetriebegehäuse (12) angebaut ist.

## Claims

1. A transmission arrangement for motor vehicles, having two driving axles (13, 14), in which downstream of the change-speed gearbox (5) there is provided a differential or distributor gearing (12), to the driven members (15, 19) of which are connected the two driving axles (13, 14), between which a fluid friction clutch (30) is provided, characterized in that the fluid friction clutch (30) is constructed as an independent structural unit and its two parts (28, 29) to be coupled are driven in each case by one of the two driven members (15, 19) of the differential gearing (12) by way of a gearing-up spur gear drive (20, 22; 26, 27).

2. A transmission arrangement according to Claim 1, having a differential gearing (12), the shafts of which are transverse to the direction of travel, one driven member (15) being connected directly to the differential gearing housing (17) of one driving axle (13) and the other driven member (19) being connected by way of a spur gear drive (20, 22) and an angle drive (23) to a universal-joint shaft (24) guiding the other driving axle (14), characterized in that one (28) of the parts (28, 29) of the fluid friction clutch (30) to be coupled is mounted on the shaft (21) of the driven gear (22) of the spur gear drive (20, 22) and the other (29) of the said parts (28, 29) is driven by the differential gearing housing (17) by way of a further spur gear drive (26, 27) with the same transmission ratio as the first one.

3. A transmission arrangement according to Claim 2, characterized in that the fluid friction clutch (30) is attached to the differential gearing housing (12) from the outside.

## Revendications

1. Agencement de transmission pour véhicules à moteur avec deux essieux moteurs (13, 14), dans lequel est disposé après la boîte de changement de vitesse (5) un différentiel ou une boîte de vitesse intermédiaire (12) dont les éléments de sortie (15, 19) sont réunis aux deux essieux moteurs (13, 14), entre lesquels il est prévu un embrayage hydraulique à friction (30), caractérisé en ce que l'embrayage hydraulique à friction (30) est réalisé comme une unité autonome de construction et ses deux parties (28, 29) pouvant s'accoupler sont entraînées chacune par l'un des deux éléments de sortie (15, 19) du différentiel (12), par l'intermédiaire d'un train d'engrenages à denture droite (20, 22; 26, 27) multiplicateur de vitesse.

2. Agencement de transmission selon la revendication 1, avec un différentiel (12) dont les arbres sont perpendiculaires au sens de la marche, dans lequel l'un des éléments de sortie (15) est relié directement au boîtier (17) du différentiel d'un essieu moteur (13) et l'autre élément de sortie (19) est relié, par l'intermédiaire d'un train d'engrenages à denture droite (20, 22) et de pignons coniques (23), à un arbre de transmission articulé (24) aboutissant à l'autre essieu moteur (14), caractérisé en ce que sur l'arbre (21) du pignon mené (22) du train d'engrenages à denture droite (20, 22) est montée une partie (28) des parties pouvant s'accoupler (28, 29) de l'embrayage hydraulique à friction (30), tandis que l'autre partie (29) de ces parties (28, 29) est entraînée à partir du boîtier (17) du différentiel, par l'intermédiaire d'un autre train d'engrenages à denture droite (26, 27), avec le même rapport de multiplication que celui de la première partie.

3. Agencement de transmission selon la revendication 2, caractérisé en ce que l'embrayage hydraulique à friction (30) est monté de l'extérieur sur le carter du différentiel (12).